# EUROPÄISCHE PATENTANMELDUNG

(11) **EP 0 872 376 A2**
(43) Veröffentlichungstag der Anmeldung: **21.10.1998**
(21) Anmeldenummer: 98105572.6
(22) Anmeldetag: 27.03.1998
(51) Int. Cl.: B60N 2/28

(54) **Sitzanordnung in einem Kraftfahrzeug und Kindersitz hierfür**

(30) Priorität: 16.04.1997 DE 19715875
(71) Anmelder: Micro Compact Car AG, 2500 Biel 4 (CH)
(72) Erfinder: Fausel, Joachim, 72070 Tübingen (DE)
(74) Vertreter: Weiss, Klaus

(57) **Zusammenfassung**

Ein Kindersitz, der einen schwenkbaren Fangtisch aufweist, ist bekannt. Es ist auch bekannt, an einem Fahrzeugsitz eine Halterung zur Arretierung eines Kindersitzes vorzusehen.

Erfindungsgemäß ist die Halterung am Fahrzeugsitz zwischen der Funktionsposition zur Arretierung des Kindersitzes und einer durch die Rückenlehne verdeckten Ruheposition entlang einer Bewegungsbahn schwenkbeweglich gelagert, die für ein ungehindertes Verschwenken der Halterung zwischen der Funktions- und der Ruheposition auf einen Freiraum zwischen dem Sitzkissen und der Rückenlehne in umgeklapptem Zustand abgestimmt ist.

Einsatz für die Beifahrerseite von Personenkraftwagen.

## Beschreibung

Die Erfindung betrifft eine Sitzanordnung in einem Kraftfahrzeug, insbesondere in einem Fahrgastraum eines Personenkraftwagens, mit einem an einem Fahrzeugboden festgelegten Fahrzeugsitz, der ein Sitzkissen sowie eine Rückenlehne aufweist, sowie mit einem Kindersitz, der auf dem Fahrzeugsitz positionierbar und mittels eines kindersitzfesten Verschlusses an wenigstens einer Halterung des Fahrzeugsitzes in seiner Funktionsposition arretierbar ist, die zur Arretierung des Kindersitzes zwischen der Rückenlehne und dem Sitzkissen am Fahrzeugsitz angeordnet ist, sowie einen Kindersitz zur Festlegung auf einem Fahrzeugsitz eines Kraftfahrzeugs mit einer formstabilen Kunststoffschale sowie einer Polsterung für einen Sitzbereich des Kindersitzes.

Eine solche Sitzanordnung ist für einen Beifahrersitz eines Personenkraftwagens allgemein bekannt. Dabei ist zwischen einer Rückenlehne und einem Sitzkissen des Beifahrersitzes eine starr angeordnete Halterung vorgesehen, mit der ein an einem Kindersitz angeordneter Verschluß verrastbar ist, sobald der Kindersitz in seine Funktionsposition auf dem Fahrzeugsitz gebracht ist. Dadurch wird eine Arretierung des Kindersitzes direkt mit den tragenden Teilen des Fahrzeugsitzes erzielt.

Es ist auch bekannt (DE 94 09 377 U1), einen in einem Fahrzeug positionierbaren Kindersitz mit einem um eine in Fahrzeuglängsrichtung verlaufende Schwenkachse schwenkbeweglichen Fangtisch zu versehen, wobei die der Schwenklagerung des Fangtisches gegenüberliegende Seite des Fangtisches mit einem Schloß zur Festlegung des Fangtisches an einer steifen Sitzschale des Kindersitzes in seiner Funktionsposition versehen ist. Der Kindersitz wird mittels eines fahrzeugfesten Sicherheitsgurtes auf dem Fahrzeugsitz, insbesondere auf einer Fondsitzbank, festgelegt.

Aufgabe der Erfindung ist es, eine Sitzanordnung sowie einen Kindersitz der eingangs genannten Art zu schaffen, die eine verbesserte Sicherung von Kindern in einem Kraftfahrzeug ermöglichen.

Für die Sitzanordnung wird diese Aufgabe dadurch gelöst, daß die Halterung am Fahrzeugsitz zwischen der Funktionsposition zur Arretierung des Kindersitzes und einer durch die Rückenlehne verdeckten Ruheposition entlang einer Bewegungsbahn schwenkbeweglich gelagert ist, die für ein ungehindertes Verschwenken der Halterung zwischen der Funktions- und der Ruheposition auf einen Freiraum zwischen dem Sitzkissen und der Rückenlehne im umgeklappten Zustand abgestimmt ist. Dadurch ist es möglich, die Halterung für den Zeitraum wegzuschwenken, zu dem sie ungenutzt ist. Der Sitzkomfort auf dem Fahrzeugsitz wird somit nicht durch die zwischen dem Sitzkissen und der Rückenlehne herausragende Halterung beeinträchtigt. Dabei kann die Halterung in besonders einfacher Weise aus ihrer Funktionsposition in ihre Ruheposition verschwenkt werden, indem zunächst die Rückenlehne nach vorne umgeklappt und anschließend die Halterung durch den entstandenen Freiraum hindurch nach hinten verschwenkt wird.

In Ausgestaltung der Erfindung ist dem kindersitzfesten Verschluß ein Betätigungselement zur Entriegelung der Arretierung des Kindersitzes zugeordnet. Durch eine einfache manuelle Bedienung des Betätigungselementes kann der Kindersitz somit aus seiner Funktionsposition auf dem Fahrzeugsitz gelöst und aus dem Fahrzeug entfernt werden.

In weiterer Ausgestaltung der Erfindung ist wenigstens eine weitere Halterung zur Arretierung eines Kindersitzes in dem Kraftfahrzeug karosseriefest angeordnet. Die wenigstens eine weitere Halterung kann in einem Laderaum und/oder an anderer Stelle im Kraftfahrzeug karosseriefest angeordnet sein. Die feste Anordnung an der Karosserie kann indirekt oder direkt gestaltet sein.

In weiterer Ausgestaltung der Erfindung ist die weitere Halterung in einem Fußraum in Fahrtrichtung vor dem Fahrzeugsitz zur Arretierung eines Kindersitzes vorgesehen, die am Fahrzeugboden oder am Fahrzeugsitz festgelegt ist. Dadurch ist es vorteilhaft möglich, auf der Beifahrerseite des Kraftfahrzeugs zwei Kinder mitzuführen, die in zwei hintereinander angeordneten Kindersitzen Platz nehmen können. Dabei ist der eine Kindersitz im Fußraum und der andere Kindersitz auf dem Fahrzeugsitz positioniert. Vorteilhaft ist die Halterung im Fußraum derart gestaltet, daß im Fußraum der gleiche Kindersitz wie auf dem Fahrzeugsitz positionierbar ist.

In weiterer Ausgestaltung der Erfindung ist ein keilförmiges Stützelement vorgesehen, das im Fußraum auf dem Fahrzeugboden positionierbar ist, um den Kindersitz in einer der Funktionsposition auf dem Fahrzeugsitz entsprechenden Position im Fußraum auszurichten. Durch das keilförmige Stützelement ist somit gewährleistet, daß die Sitzposition des Kindes in dem Kindersitz des Fußraumes von ihrer Neigung her der Sitzposition des Kindersitzes auf dem Fahrzeugsitz entspricht.

Für den Kindersitz wird die erfindungsgemäße Aufgabe dadurch gelöst, daß ein Tragrohrgestell vorgesehen ist, das von der Kunststoffschale ummantelt ist. Das Tragrohrgestell kann entweder teilweise oder ganz von der Kunststoffschale ummantelt sein. Das in die Kunststoffschale integrierte Tragrohrgestell erhöht die Stabilität und Formsteifigkeit der Kunststoffschale erheblich, so daß der Kindersitz ohne Beeinträchtigungen erhöhten Belastungen aussetzbar ist. Das Tragrohrgestell erstreckt sich in alle Bereiche der Kunststoffschale und damit sowohl in einen Boden- als auch in einen Rückenlehnenbereich der Kunststoffschale sowie in einen Armlehnenbereich.

In weiterer Ausgestaltung der Erfindung ist der Halterung ein elektronischer Schalter zur Aktivierung oder Deaktivierung einer vor dem Fahrzeugsitz angeordneten Airbageinheit abhängig von der Arretierung des Kindersitzes zugeordnet. Mit dem Arretieren des Kindersitzes auf dem Fahrzeugsitz oder im Fußraum wird somit automatisch die entsprechende Airbageinheit, bei einem Beifahrersitz die Beifahrerairbageinheit, deaktiviert, um durch einen auslösenden Airbag verursachte Verletzungen zu vermeiden.

In Ausgestaltung des Kindersitzes, wobei am Kindersitz ein zwischen einer Sicherungsposition und einer Freigabeposition schwenkbeweglicher Fangtisch angeordnet ist, ist an dem Fangtisch wenigstens ein Gurtende eines Schultergurtes festgelegt, der mit seinem wenigstens einen gegenüberliegenden Gurtende in einer Rückenlehne des Kindersitzes gehalten ist. Falls zwei Schultergurtteile vorgesehen sind, sind diese vorzugsweise ausziehbar und automatisch zurückziehbar gestaltet. Bei lediglich einem Schultergurt verläuft dieser vorzugsweise diagonal von der Rückenlehne aus zu der der Schwenklagerung des Fangtisches gegenüberliegenden Seite des Fangtisches, wodurch der Schultergurt keine selbsttätige Rückzieheinrichtung aufweisen muß. In beiden Fällen wird der Schultergurt vorteilhaft mit der Verschwenkung des Fangtisches in seine Sicherungsposition automatisch in seine Funktionsposition überführt, so daß ein zusätzliches Angurten des Kindes nach dem Schließen des Fangtisches entfällt.

In weiterer Ausgestaltung der Erfindung weist der Fangtisch ein Prallkissen auf, das höhenverstellbar - auf eine Sitzfläche des Kindersitzes bezogen - an einer Fangtischkonsole gehalten ist. Dadurch ist es möglich, das Prallkissen auf unterschiedliche Kindergrößen abzustimmen. Zusätzlich kann das Prallkissen auch weitenverstellbar relativ zur Sitzposition des Kindes angeordnet sein, so daß sich eine kombinierte Höhen- und weitenverstellbarkeit ergibt.

In weiterer Ausgestaltung der Erfindung weist das Prallkissen mehrere parallel und übereinander angeordnete, in Fahrtrichtung offene Schlitzaufnahmen auf, die in ihrer lichten Höhe jeweils identisch gestaltet und alternativ auf einen mit der Fangtischkonsole verbundenen Quersteg derart aufsteckbar sind, daß ein Grund der aufgesteckten Schlitzaufnahme sich an einer dem Sitzbereich des Kindersitzes zugewandten Rückseite des Quersteges abstützt. Dadurch schafft das Prallkissen in besonders einfacher Weise einen sicheren Rückhalt für ein im Kindersitz befindliches Kind. Durch das einfache Aufstecken und Abziehen des Prallkissens ist ein äußerst einfaches Entfernen und Versetzen des Prallkissens in unterschiedliche Höhenpositionen ohne die Zuhilfenahme eines Werkzeugs ermöglicht.

In weiterer Ausgestaltung der Erfindung ist der Quersteg unter Zwischenlagerung von Energieabsorptionselementen an der Fangtischkonsole gehalten. Dadurch wird bei einem Fahrzeugaufprall der Aufprall des Kindes auf den Fangtisch und auf das Prallkissen gedämpft.

Weitere Vorteile und Merkmale der Erfindung ergeben sich aus den Ansprüchen sowie aus der nachfolgenden Beschreibung von bevorzugten Ausführungsbeispielen der Erfindung, die anhand der Zeichnungen dargestellt sind.
- Fig. 1: zeigt eine perspektivische Darstellung einer Ausführungsform einer erfindungsgemäßen Sitzanordnung, wobei ein Kindersitz auf einem Fahrzeugsitz positioniert ist,
- Fig. 2: eine Seitenansicht der Sitzanordnung nach Fig. 1, wobei sowohl der auf dem Fahrzeugsitz befindliche Kindersitz in seiner Funktionsposition arretiert ist, als auch in einem Fußraum vor dem Fahrzeugsitz ein weiterer Kindersitz positioniert ist,
- Fig. 3: eine Seitenansicht eines Prallkissens eines Fangtisches des Kindersitzes nach den Fig. 1 und 2, der in Fahrtrichtung auf einen schematisiert dargestellten Quersteg einer Fangtischkonsole des Kindersitzes aufsteckbar ist,
- Fig. 4: eine aufgebrochene Darstellung der Fangtischkonsole des Kindersitzes nach den Fig. 1 und 2 auf einer Schloßseite,
- Fig. 5: in schematischer, aufgebrochener Darstellung die gegenüberliegene Seite der Fangtischkonsole im Bereich einer Schwenklagerung des Fangtisches,
- Fig. 6: einen Ausschnitt des Fahrzeugsitzes nach den Fig. 1 und 2 im Übergangsbereich zwischen einem Sitzkissen und einer Rückenlehne, wobei ein Rastbügel einer Halterung für den Kindersitz in einer Ruheposition dargestellt ist,
- Fig. 7: die Darstellung nach Fig. 6, wobei die Rückenlehne in ihre nach vorne umgeklappte Position verschwenkt ist,
- Fig. 8: die Darstellung nach den Fig. 6 und 7, wobei der Rastbügel in seine Funktionsposition nach vorne verschwenkt ist,
- Fig. 9: eine Darstellung ähnlich Fig. 8, wobei die Rückenlehne wieder in ihre aufrechte Sitzstellung zurückgeschwenkt wird, und
- Fig. 10: schematisch in einer aufgebrochenen Seitenansicht die Arretierung des Kindersitzes an den Rastbügeln der fahrzeugsitzfesten Halterung.

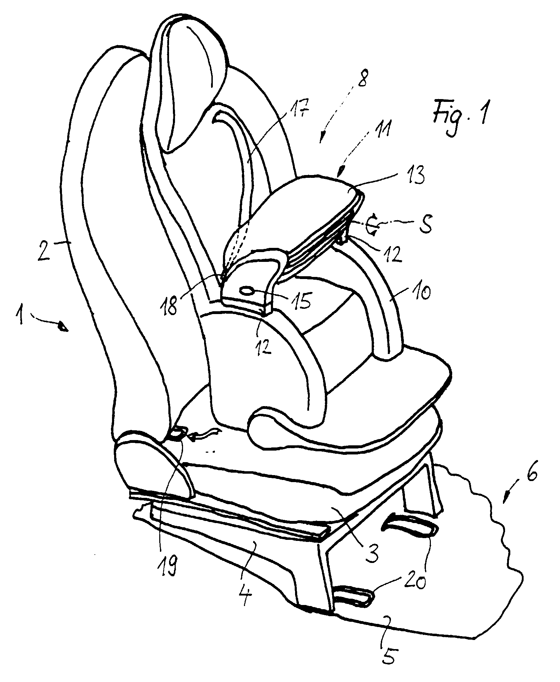

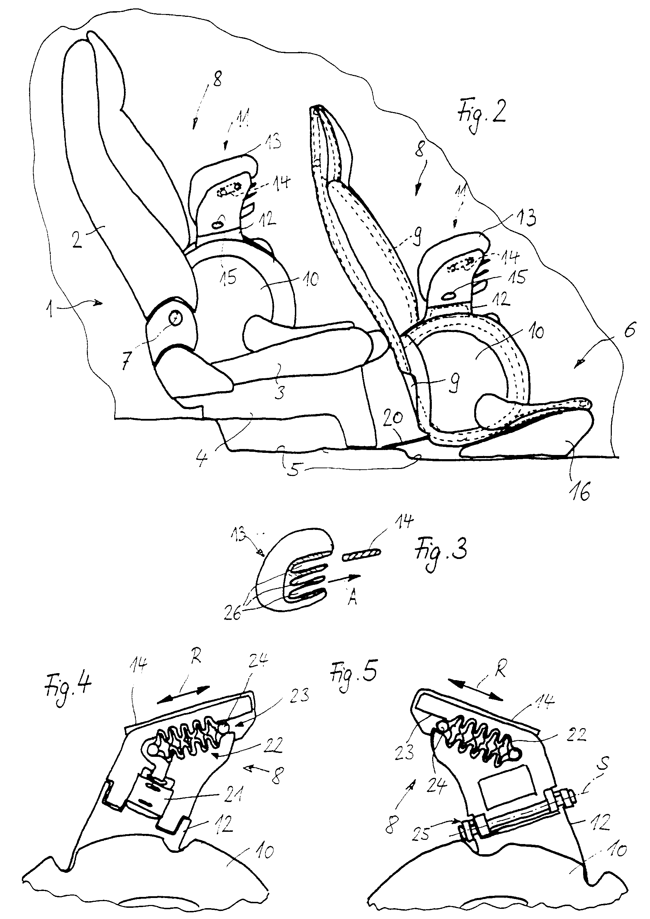

Ein Personenkraftwagen weist auf einer Beifahrerseite einen Fahrzeugsitz 1 gemäß den Fig. 1 und 2 auf, der mit einer klappbaren Rückenlehne 2 sowie einem Sitzkissen 3 versehen ist. Der Fahrzeugsitz 1 ist mittels einer Sitzkonsole 4 auf einem Fahrzeugboden des Personenkraftwagens festgelegt. In Fahrtrichtung vor dem Fahrzeugsitz 1 befindet sich ein Fußraum 6, der nach vorne durch ein nicht dargestelltes Cockpit und eine Stirnwand begrenzt ist. Im Cockpit ist in ebenfalls nicht dargestellter Weise eine Beifahrerairbageinheit integriert. Die Rückenlehne 2 ist um eine Klappachse 7 in Fahrtrichtung nach vorne umklappbar und aus dieser umgeklappten Position wieder in die aufrechte Sitzposition zurückschwenkbar.

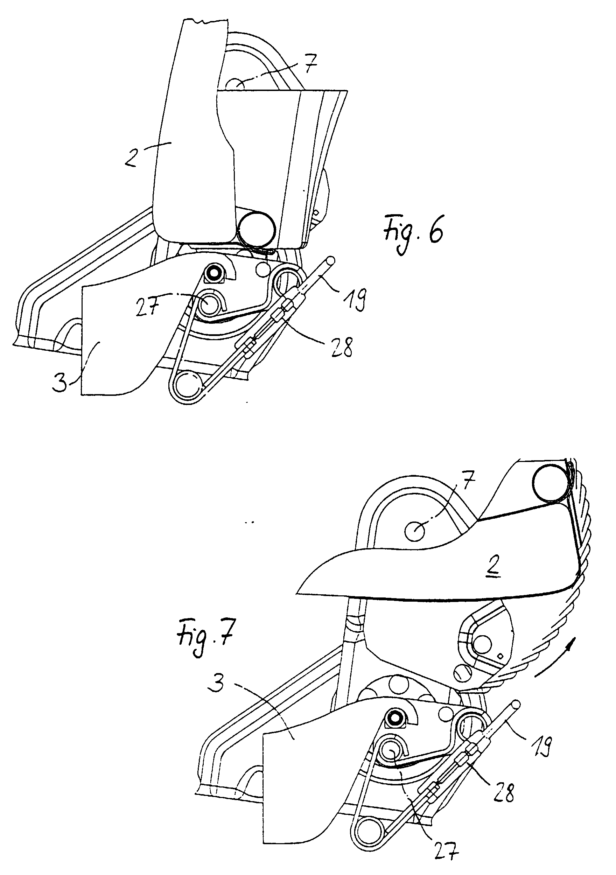

Auf dem Fahrzeugsitz 1 ist ein Kindersitz 8 positioniert, der aus einem stabilen Tragrohrgestell 9 sowie einer steifen, das Tragrohrgestell 9 ummantelnden Kunststoffschale 10 gebildet ist. In einem Sitzbereich des Kindersitzes 8 ist eine nicht näher bezeichnete Polsterung vorgesehen. Der Kindersitz 8 weist einen Fangtisch 11 auf, der auf nicht näher bezeichneten Armlehnen des Kindersitzes 8 mit Hilfe einer Fangtischkonsole 12 positioniert ist und sich quer über die Sitzposition des Kindersitzes 8 erstreckt. Der Fangtisch 11 weist ein Prallkissen 13 auf (Fig. 3), das auf einen Quersteg 14 der Fangtischkonsole 12 aufsteckbar ist. Dazu ist das Prallkissen 13 mit einem nicht näher bezeichneten formstabilen Einsatz versehen, in dem drei parallel und übereinander angeordnete Schlitzaufnahmen 26 vorgesehen sind, die zu den Seiten und in Fahrtrichtung nach vorne offen gestaltet sind. Die Höhe der drei Schlitzaufnahmen 26 ist jeweils identisch gestaltet und an die Dicke des Quersteges 14 derart angepaßt, daß jeweils eine der Schlitzaufnahmen 26 kraftschlüssig auf den Quersteg 14 in Pfeilrichtung A aufsteckbar ist. Das Aufstecken erfolgt in Fahrtrichtung, so daß der Grund jeder Schlitzaufnahme 26 auf der dem Sitzbereich des Kindersitzes 8 zugewandten Rückseite des Quersteges 14 anschlägt.

Bei einem nicht dargestellten Ausführungsbeispiel weisen die Schlitzaufnahmen des Prallkissens unterschiediche Tiefen auf, so daß das Prallkissen unterschiedlich weit auf den Quersteg aufsteckbar ist. Dadurch ist eine Weitenverstellung des Prallkissens möglich, da das Prallkissen auf diese Weise in unterschiedlichen Abständen zur Rückenlehne des Kindersitzes positioniert ist. Auch durch eine Versetzung der Schlitzaufnahmen schräg zueinander ergibt sich eine Weitenverstellbarkeit, die durch eine entgegengesetzt schräge, zur Rückenlehne gerichtete Stirnseite der Prallkissenfläche noch verbessert werden kann.

Der Quersteg 14 ist auf seiner gegenüberliegenden Seite mit jeweils einem nicht näher dargestellten Führungsschlitten versehen, der in korrespondierenden Gleitführungen 23 von Sockeln der Fangtischkonsole 12 in Pfeilrichtung R gleitbeweglich gehalten sind (Fig. 4 und 5). Die Führungsschlitten und damit auch der Quersteg 14 sind über einen Anlenkpunkt 24 mittels eines Energieabsorptionselementes 22 an der Fangtischkonsole 12 festgelegt, das in Pfeilrichtung R unter Absorption von Energie deformierbar ist. Beim dargestellten Ausführungsbeispiel ist jedes Energieabsorptionselement 22 als mäander- oder balgartiges Blechteil gestaltet, das bei Auftreten entsprechender Belastungen in Pfeilrichtung R auseinandergezogen wird.

Wie anhand der Fig. 1 bis 5 weiterhin erkennbar ist, ist der Fangtisch 11 an einer seitlichen Fangtischkonsole 12 um eine Schwenkachse S schwenkbeweglich gelagert. Dadurch ist der Fangtisch 11 aus seiner dargestellten Sicherungsposition in eine Freigabeposition hochschwenkbar, die für den Ein- und Ausstieg eines Kindes geeignet ist. An der der Schwenklagerung 25 gegenüberliegenden Seite der Fangtischkonsole 12 ist ein Gurtende 18 eines Schultergurtes 17 festgelegt, der sich von dem Gurtende 18 aus diagonal nach oben zur Rückenlehne des Kindersitzes 8 hin erstreckt und in der Rückenlehne, vorzugsweise an dem Tragrohrgestell 9 mittels einer entsprechenden Gurtschlaufe gehalten ist. Durch diese Anordnung des Schultergurtes 17 befindet sich der Schultergurt 17 automatisch in seiner Sicherungsposition, sobald der Fangtisch 11 in seine Sicherungsposition verschwenkt ist. Der Schultergurt 17 ist mit einer nicht dargestellten Längenverstelleinrichtung versehen, die die Einstellung für unterschiedliche Kindergrößen ermöglicht. Auf der der Schwenklagerung 25 und damit der Schwenkachse S gegenüberliegenden Seite ist der Schwenktisch 8 mittels eines Schlosses 21 an einem sitzfesten Sockel der Fangtischkonsole 12 festlegbar, wobei das Schloß 21 durch einen Betätigungsknopf 15 in einfacher Weise lösbar ist. Das Schloß 21 stellt ein an sich bekanntes mechanisches Schloß dar, wobei dem schwenkbeweglichen Teil des Fangtisches 8 das eigentliche Schloß 21 und dem Sockel der Fangtischkonsole 12 eine Schloßzunge zugeordnet ist.

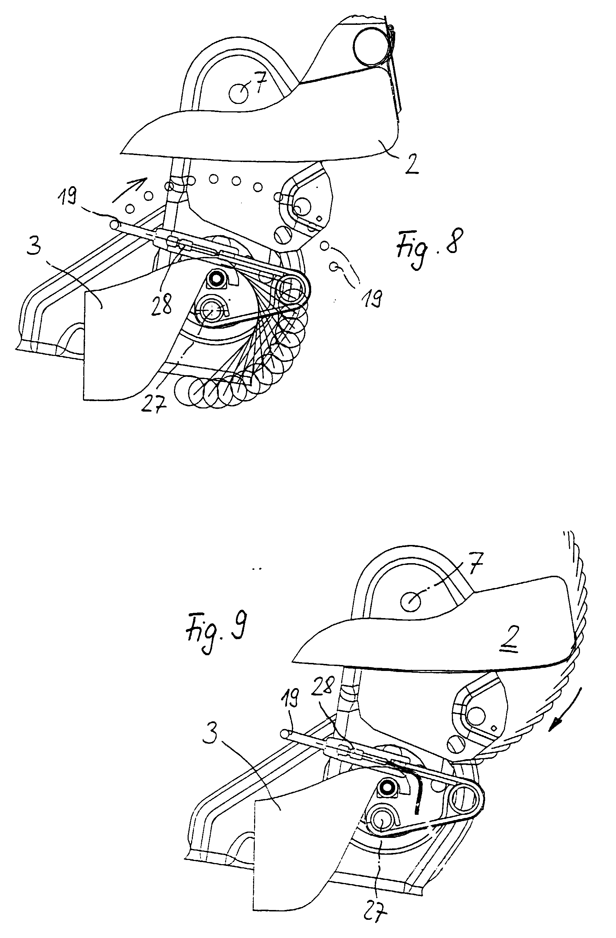

Der Kindersitz 8 ist an einer fahrzeugsitzfesten Halterung in seiner Funktionsposition auf dem Fahrzeugsitz 1 (Fig. 2) festlegbar. Dazu weist die sitzfeste Halterung zwei Rastbügel 19 auf, die in ihrer Funktionsposition zwischen einer Unterkante der Rückenlehne 2 und dem Sitzkissen 3 nach vorne abragen (Fig. 1 sowie 6 bis 10). Beide Rastbügel sind mittels entsprechender Ausleger auf einer gemeinsamen Schwenkwelle gehalten, die um eine zur Klappachse 7 parallele Schwenkachse 27 drehbar ist. Um diese Schwenkachse 27 sind die beiden Rastbügel 19 gemeinsam aus der Funktionsposition nach hinten in eine Ruheposition verschwenkbar und aus dieser Ruheposition wieder zurück in die Funktionsposition schwenkbar. In der Ruheposition sind die Rastbügel 19 hinter dem Sitzkissen 3 und hinter der Rückenlehne 2 angeordnet. Während der Schwenkbewegung werden die Rastbügel 19 entlang einer in Fig. 8 angedeuteten Bewegungsbahn zwischen der Rückenlehne 2 und dem Sitzkissen hindurchgeführt. Um den nötigen Freiraum zu schaffen, daß eine ungehinderte Schwenkbewegung der Rastbügel 19 erfolgen kann, wird die Rückenlehne 2 nach vorne umgeklappt, so daß sie sich in den Stellungen nach den Fig. 7 bis 9 befindet. Die bogenartige Form der Ausleger als Verlängerung zur Schwenkwelle ist derart gestaltet, daß die Bewegungsbahn der Rastbügel 19 ausschließlich diesen Freiraum durchläuft. Die Ausleger weisen zudem eine gewisse Federwirkung auf.

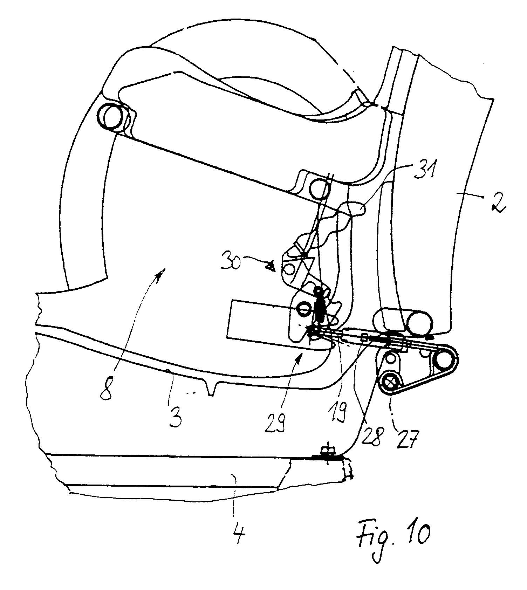

In ihrer Funktionsposition gemäß den Fig. 8 und 9, in der die Rastbügel 19 vorzugsweise blockiert sind, dienen die Rastbügel 19 zur Halterung des Kindersitzes 8 auf dem Fahrzeugsitz 1 in seiner Funktionsposition. Dazu sind an einer Rückseite des Kindersitzes 8 gemäß Fig. 10 den Rastbügeln 19 entsprechende Aufnahmeschlitze vorgesehen, in denen jeweils ein mechanischer Verschluß 29 in Form einer federbelasteten Sperrklinke vorgesehen ist. Der Verschluß ist im Kindersitz integriert. Über ein zentrales Hebelgelenk 30 sind die beiden Sperrklinken in den beiden Rastschlitzen des Kindersitzes 8 durch einen Betätigungshebel 31 lösbar, der aus dem Inneren des Kindersitzes 8 zur Rückseite des Kindersitzes herausragt und eine manuelle Bedienung ermöglicht. Selbstverständlich kann ein solches Betätigungselement auch an anderen Stellen am Kindersitz 8 angeordnet sein, die eine einfache Zugänglichkeit ermöglichen.

Zur Festlegung des Kindersitzes 8 auf dem Fahrzeugsitz 1 wird der Kindersitz 8 gemäß Fig. 1 auf dem Sitzkissen 3 nach hinten geschoben, bis die Rastbügel 19 in die jeweilige Schlitzaufnahme des Kindersitzes 8 eingreifen und die Sperrklinken des Verschlusses 29 einrasten. Ein Lösen und Entfernen des Kindersitzes 8 erfolgt in einfacher Weise durch eine Bedienung des Betätigungshebels 31, wodurch die Sperrklinken gelöst werden und der Kindersitz 8 von den Rastbügeln 19 abgezogen werden kann. Um bei festgelegtem Kindersitz 8 eine Aktivierung des Beifahrerairbags zu verhindern, ist einem der beiden Rastbügel 19 ein elektronischer Schalter 28 zugeordnet, der bei Einrasten des Kindersitzes 8 auf den Rastbügeln 19 die Kontaktierung zum Beifahrerairbag direkt oder indirekt unterbricht.

Wie aus den Fig. 1 und 2 erkennbar ist, sind vor dem Fahrzeugsitz 1 zwei weitere Haltebügel 20 am Fahrzeugboden 5 festgelegt, die in ihrer Funktion den Rastbügeln 19 entsprechen. Die Haltebügel 20 sind jedoch nicht schwenkbeweglich, sondern starr am Fahrzeugboden 5 angeordnet und ragen nach vorne in den Fußraum 6 hinein ab. An diesen Haltebügeln 20 ist ein weiterer, identisch zum Kindersitz 8 gestalteter Kindersitz 8 im Fußraum positionierbar und festlegbar, so daß auf der Beifahrerseite zwei Kindersitze hintereinander angeordnet werden können. Auch den Haltebügeln 20 ist in nicht dargestellter Weise ein elektronischer Schalter zur Aktivierung und Deaktivierung des Beifahrerairbags zugeordnet. Um den Kindersitz 8 in einer der Funktionsposition des Kindersitzes 8 auf dem Fahrzeugsitz 1 entsprechenden Neigungsposition auszurichten und zu halten, ist ein Stützkeil 16 unter einen Fuß des Kindersitzes 8 unterlegt, der den Kindersitz derart schräg stellt, daß zudem eine Abstützung der Rückenlehne des Kindersitzes 8 an einer Vorderkante des Sitzkissens 3 des Fahrzeugsitzes 1 erfolgt. Somit wird eine funktionsgerechte Sitzposition auch für den vorderen Kindersitz 8 erreicht. Solange der Stützkeil 16 nicht benötigt wird, kann er in einfacher Weise aus dem Fahrzeuginnenraum entfernt werden.

## Patentansprüche

1. Sitzanordnung in einem Kraftfahrzeug, insbesondere in einem Fahrgastraum eines Personenkraftwagens, mit einem an einem Fahrzeugboden festgelegten Fahrzeugsitz, der ein Sitzkissen sowie eine Rückenlehne aufweist, sowie mit einem Kindersitz, der auf dem Fahrzeugsitz positionierbar und mittels eines kindersitzfesten Verschlusses an wenigstens einer Halterung des Fahrzeugsitzes in seiner Funktionsposition arretierbar ist, die zur Arretierung des Kindersitzes zwischen der Rückenlehne und dem Sitzkissen am Fahrzeugsitz angeordnet ist,
**dadurch gekennzeichnet,**
daß die Halterung (19) am Fahrzeugsitz (1) zwischen der Funktionsposition zur Arretierung des Kindersitzes (8) und einer durch die Rückenlehne (2) verdeckten Ruheposition entlang einer Bewegungsbahn schwenkbeweglich gelagert ist, die für ein ungehindertes Verschwenken der Halterung (19) zwischen der Funktions- und der Ruheposition auf einen Freiraum zwischen dem Sitzkissen (3) und der Rückenlehne (2) im umgeklappten Zustand abgestimmt ist.

2. Sitzanordnung nach Anspruch 1,
**dadurch gekennzeichnet,**
daß die Halterung (19) wenigstens einen um eine parallel zur Klappachse (7) der Rückenlehne (2) verlaufende Schwenkachse (27) schwenkbeweglich gelagerten Rastbügel (19) aufweist, dem an einer Rückseite des Kindersitzes (8) wenigstens eine korrespondierende Rastaufnahme als Teil des kindersitzfesten Verschlusses (29) zugeordnet ist.

3. Sitzanordnung nach Anspruch 2,
**dadurch gekennzeichnet,**
daß der kindersitzfeste Verschluß (29) wenigstens eine mechanische Sperrklinke aufweist, die federbelastet selbsttätig in ihrer Rastposition an dem Rastbügel (19) einrastet.

4. Sitzanordnung nach Anspruch 2 oder 3,
**dadurch gekennzeichnet,**
daß dem kindersitzfesten Verschluß (29) ein Betätigungselement (31) zur Entriegelung der Arretierung des Kindersitzes (8) zugeordnet ist.

5. Sitzanordnung nach einem der vorhergehenden Ansprüche,
**dadurch gekennzeichnet,**
daß wenigstens eine weitere Halterung (20) zur Arretierung eines Kindersitzes in dem Kraftfahrzeug karosseriefest angeordnet ist.

6. Sitzanordnung nach Anspruch 5,
**dadurch gekennzeichnet,**
daß die weitere Halterung (20) zur Arretierung eines Kindersitzes (8) in einem Fußraum (6) in Fahrtrichtung vor dem Fahrzeugsitz (1) vorgesehen und am Fahrzeugboden (5) oder am Fahrzeugsitz festgelegt ist.

7. Sitzanordnung nach Anspruch 6,
**dadurch gekennzeichnet,**
daß die Halterung wenigstens einen Haltebügel (20) aufweist, an dem der Kindersitz (8) mittels seiner korrespondierenden Rastaufnahme festlegbar ist.

8. Kindersitz nach einem der vorhergehenden Ansprüche,
**dadurch gekennzeichnet,**
daß der Halterung (19) ein elektronischer Schalter (28) zur Aktivierung oder Deaktivierung einer vor dem Fahrzeugsitz (1) angeordneten Airbageinheit abhängig von der Arretierung des Kindersitzes (8) zugeordnet ist.

9. Sitzanordnung nach einem der vorhergehenden Ansprüche,
**dadurch gekennzeichnet,**
daß ein keilförmiges Stützelement (16) vorgesehen ist, das im Fußraum (6) auf dem Fahrzeugboden (5) positionierbar ist, um den Kindersitz (8) in einer der Funktionsposition auf dem Fahrzeugsitz (1) entsprechenden Position im Fußraum (6) auszurichten.

10. Kindersitz zur Festlegung auf einem Fahrzeugsitz eines Kraftfahrzeugs, insbesondere für eine Sitzanordnung nach dem Oberbegriff des Anspruchs 1 oder nach einem der vorhergehenden Ansprüche, mit einer formstabilen Kunststoffschale sowie einer Polsterung für einen Sitzbereich des Kindersitzes,
**dadurch gekennzeichnet,**
daß ein Tragrohrgestell (9) vorgesehen ist, das von der Kunststoffschale (10) ummantelt ist.

11. Kindersitz nach dem Oberbegriff des Anspruchs 9 oder nach Anspruch 10, wobei am Kindersitz ein zwischen einer Sicherungsposition und einer Freigabeposition schwenkbeweglicher Fangtisch angeordnet ist,
**dadurch gekennzeichnet,**
daß an dem Fangtisch (11) wenigstens ein Gurtende (18) eines Schultergurtes (17) festgelegt ist, der mit seinem wenigstens einen gegenüberliegenen Gurtende in einer Rückenlehne des Kindersitzes (8) gehalten ist.

12. Kindersitz nach dem Oberbegriff des Anspruchs 10 oder nach Anspruch 11,
**dadurch gekennzeichnet,**
daß der Fangtisch (11) ein Prallkissen (13) aufweist, das höhenverstellbar - auf eine Sitzfläche des Kindersitzes (8) bezogen - an einer Fangtischkonsole (12) gehalten ist.

13. Kindersitz nach Anspruch 12,
**dadurch gekennzeichnet,**
daß das Prallkissen (13) mehrere parallel und übereinander angeordnete, in Fahrtrichtung offene Schlitzaufnahmen (26) aufweist, die in ihrer lichten Höhe jeweils identisch gestaltet und alternativ auf einen mit der Fangtischkonsole (12) verbundenen Quersteg (14) derart aufsteckbar sind, daß ein Grund der jeweils aufgesteckten Schlitzaufnahme (26) sich an einer dem Sitzbereich des Kindersitzes (8) zugewandten Rückseite des Quersteges (14) abstützt.

14. Kindersitz nach Anspruch 11 oder 12,
**dadurch gekennzeichnet,**
daR der Quersteg (14) unter Zwischenlagerung von Energieabsorptionselementen (22) an der Fangtischkonsole (12) gehalten ist.
